# EUROPÄISCHE PATENTSCHRIFT

(11) **EP 1 623 810 B1**
(45) Veröffentlichungstag und Bekanntmachung des Hinweises auf die Patenterteilung: **31.10.2007**
(21) Anmeldenummer: 05015062.2
(22) Anmeldetag: 12.07.2005
(51) Int. Cl.: B29C 45/17, B29C 45/27

(54) **Heisskanaldüse**
Hot runner nozzle
Buse à canal chaud

(30) Priorität: 05.08.2004 DE 102004038056
(43) Veröffentlichungstag der Anmeldung: 08.02.2006
(73) Patentinhaber: Otto Männer Innovation GmbH, 79353 Bahlingen (DE)
(72) Erfinder: Selak, Vincenc, 67860 Rhinau (FR)
(74) Vertreter: Dimmerling, Heinz

(56) Entgegenhaltungen:
- EP-A- 0 835 732
- WO-A-01/98054
- WO-A-20/04067255
- DE-A1- 19 647 389
- US-A1- 2004 091 562

## Beschreibung

Die Erfindung betrifft eine Heißkanaldüse nach dem Oberbegriff der Ansprüche 1 und 5 für Spritzgießformen, mit einem Düsenkörper, welcher einen mit einer Düsenaustrittsöffnung verbundenen Durchtrittskanal hat, und an welchem ein Thermoelement befestigt ist.

Eine derartige Heißkanaldüse ist im Stand der Technik hinlänglich bekannt und wird von der Anmelderin bereits seit längerem hergestellt und vertrieben.

Bei der bekannten Spritzgießdüse wird ein Thermofühler, welcher zur Messung der Temperatur des Düsenkörpers im Bereich der Düsenaustrittsöffnung vorgesehen ist, in eine im Bereich der Düsenaustrittsöffnung ausgebildete sich in das Innere des Düsenkörpers erstreckende Ausnehmung gesteckt.

Der Thermofühler ist regelmäßig in einem Röhrchen angeordnet, durch welches sich auch die Zuleitung des Thermofühlers erstreckt. Da auf dem Düsenkörper eine Heizwicklung angeordnet wird, darf der Thermofühler beziehungsweise das Röhrchen, in dem der Thermofühler angeordnet ist und durch das sich die Zuleitung des Thermofühlers erstreckt, nicht aus dem Düsenkörper hervorstehen. Deshalb weist der Düsenkörper ausgehend von der Ausnehmung eine sich in axialer Richtung erstreckende Nut auf, in welcher die Zuleitung des Thermofühlers beziehungsweise das Röhrchen angeordnet ist.

Da sich die Ausnehmung in das Innere des Düsenkörpers erstreckt, die Nut jedoch in axialer Richtung des Düsenkörpers verläuft, ist es erforderlich, das vordere Ende des Röhrchens an dem der Thermofühler angeordnet ist, abzuwinkeln. Da der Thermofühler aus Gründen einer möglichst guten Wärmeleitung im Grund der Ausnehmung mit dem Düsenkörper Kontakt haben soll, muss die Abwinklung sehr präzise erfolgen. Dies ist sehr aufwendig.

Des Weiteren wirken sich Unebenheiten der Heizwicklung nachteilig auf die Kraft aus, mit der der Thermofühler auf den Grund der Ausnehmungen gepresst wird. Die Kraft ist nicht immer gleich groß. Dies resultiert in einen von Heißkanaldüse zu Heißkanaldüse unterschiedlichen Wärmeübergangswiderstand zwischen dem Thermoelement und dem Düsenkörper.

Ein unterschiedlicher Wärmeübergangswiderstand zwischen dem Thermofühler und dem Düsenkörper wirkt sich jedoch nachteilig auf die Messgenauigkeit aus. Dies hat zur Folge, dass die mittels des Thermoelements gemessene Temperatur des Düsenkörpers im Bereich der Düsenaustrittsöffnung nicht bei jeder Düse denselben Wert hat. Dies ist insbesondere bei Spritzgießformen mit mehreren Heißkanaldüsen sehr nachteilig, da unterschiedliche Temperaturen eine unter schiedliche Fließfähigkeit des Kunststoffs bewirken, was eine unterschiedliche Konstitution des herzustellenden Produkts und damit einen Qualitätsverlust zur Folge haben kann.

Aus der US 2004/0091562 A1 ist eine Spritzgießdüse bekannt, an welcher ein Thermoelement befestigt ist. Zur Befestigung des Thermoelements weist der Körper, an dem das Thermoelement befestigt ist, ausgehend von einer Stirnseite des Körpers einen im Durchmesser verringerten Bereich auf. Am Übergang des Bereichs mit regulärem Durchmesser zu dem im Durchmesser verringerten Bereich ist eine Schulter ausgebildet, an welche das Thermoelement zur Befestigung angelegt wird. Nachdem das Thermoelement an der Schulter angeordnet ist, wird über den Körper ein ringförmiges Element geschoben, welches ausgehend von einer Stirnseite des Elements einen Bereich hat, dessen Innendurchmesser dem regulären Außendurchmesser des Körpers entspricht. Ausgehend von der anderen Stirnseite weist das Element einen Bereich auf, dessen Innendurchmesser dem verringerten Durchmesser des Körpers entspricht. Das Element weist an dem Übergang des größeren Innendurchmessers auf den kleineren Innendurchmesser eine Schulter auf, mittels welcher das Thermoelement auf die Schulter des Körpers geklemmt werden kann. Das ringförmige Element weist des Weiteren einen Spalt auf, mittels welchem das Thermoelement aus dem Bereich zwischen Körper und ringförmigen Element herausgeführt ist.

Es ist Aufgabe der Erfindung, eine eingangs genannte Heißkanaldüse derart auszubilden, dass an ihrem Düsenkörper ein Thermoelement auf einfache Weise zuverlässig und mit einem geringen Wärmeübergangswiderstand anordenbar ist.

Die Lösung dieser Aufgabe ergibt sich aus den Merkmalen des Ansprüche 1 und 5. Vorteilhafte Weiterbildungen der Erfindung ergeben sich aus den Unteransprüchen.

Gemäß der Erfindung ist eine Heißkanaldüse für Spritzgießformen, mit einem Düsenkörper, welcher einen mit einer Düsenaustrittsöffnung verbundenen Durchtrittskanal hat, und an welchem ein Thermoelement befestigbar ist Auf dem Düsenkörper ist eine Klemmhülse angeordnet. welche an ihrer Innenseite eine Ausnehmung aufweist, die durch einen Zugang wie beispielsweise ein Durchbruch von außen zugänglich ist.

Dadurch, dass die Ausnehmung an der Innenseite der Klemmhülse ausgebildet ist, bildet die Ausnehmung mit dem Düsenkörper einen Hohlraum, in dem das Thermoelement mit direktem Kontakt zu dem Düsenkörper anordenbar ist. Da die Ausnehmung durch einen Zugang von außen zugänglich ist, lässt sich ein Thermoelement, welches in der Regel zwar ein Thermofühler ist, jedoch auch ein Heizelement sein kann, auf einfache Weise von außen in die Ausnehmung einbringen.

Das Thermoelement und die Ausnehmung können so ausgebildet sein, dass das Thermoelement unter einem Druck mit dem Düsenkörper in Kontakt steht, wenn es in der Ausnehmung angeordnet ist.

Als sehr vorteilhaft hat sich eine Ausführungsform der Erfindung herausgestellt, bei der die Klemmhülse verdrehbar auf dem Düsenkörper angeordnet ist. Hier durch lässt sich das Thermoelement auf einfache Weise in der Ausnehmung der Klemmhülse anordnen. Es braucht lediglich durch den Zugang gesteckt zu werden und die Klemmhülse nach dem Einstecken des Thermoelements verdreht zu werden. Hierdurch befindet sich das Thermoelement in dem durch die Ausnehmung und den Düsenkörper gebildeten Hohlraum.

Bei einer besonderen Ausführungsform der Erfindung ist vorgesehen, dass sich die Ausnehmung und der Zugang in axialer Richtung der Klemmhülse bis an das untere Ende der Klemmhülse erstrecken. Dies hat den Vorteil, dass sich ein Thermoelement, welches sich über die Klemmhülse hinaus erstreckt, in dem von der Ausnehmung und dem Düsenkörper gebildeten Raum anordnen lässt Insbesondere lässt sich hierdurch ein Thermoelement, welches auf herkömmliche Art und Weise in einem Röhrchen angeordnet ist, in dem durch die Ausnehmung und den Düsenkörper gebildeten Raum anordnen. In vorteilhafter Weise ist es hierbei nicht mehr erforderlich, das Ende des Röhrchens, in dem sich das Thermoelement befindet, abzuwinkeln.

Als besonders vorteilhaft hat sich eine Ausführungsform der Erfindung herausgestellt, bei der sich die Tiefe der Ausnehmung in Richtung des Hülsenumfangs verringert. Hierdurch wird in vorteilhafter Weise erreicht, dass das Thermoelement beim Verdrehen der Klemmhülse zwischen die Wandung der Ausnehmung und dem Düsenkörper geklemmt wird. Es ist somit gewährleistet, dass das Thermoelement mit dem Düsenkörper in Kontakt steht, wodurch sich ein geringer Wärmeübergangswiderstand ergibt.

Sehr vorteilhaft bei der letztgenannten Ausführungsform ist es, wenn die Verringerung der Tiefe nach einer Kurve erfolgt. Hierdurch kann erreicht werden, dass einerseits eine zuverlässige Klemmung des Thermoelements erfolgt und anderer seits die Wandung des Thermoelements mit der Wandung der Ausnehmung über einen größeren Bereich in Kontakt steht. Entspricht der Kurvenverlauf beispielsweise an der dem Durchbruch abgewandten Seite der Ausnehmung dem Radius des Thermoelements, steht das Thermoelement mit einem Vierteil seiner Mantelfläche mit der Klemmhülse in Kontakt.

Statt dass sich die Ausnehmung und der Zugang in axialer Richtung der Klemmhülse erstrecken kann es vorteilhaft sein, dass sich die Ausnehmung und der Zugang in Richtung des Umfangs der Klemmhülse erstrecken, wie dies bei einer weiteren besonderen Ausführungsform der Erfindung vorgesehen ist. Hierdurch lässt sich das Thermoelement durch eine axiale Verschiebung in die Ausnehmung einbringen. Es ist somit nicht mehr erforderlich, dass die Klemmhülse verdrehbar auf dem Düsenkörper angeordnet ist. Die Klemmhülse kann fest auf dem Düsenkörper angeordnet sein.

Dies ist insbesondere dann vorteilhaft, wenn auf der Klemmhülse eine Heizwicklung angeordnet ist. Denn da die Heizwicklung wegen eines guten Wärmekontakts stramm auf der Klemmhülse sitzt, wird sie beim Entfernen von der Klemmhülse regelmäßig durch eine Drehbewegung gelockert. Dies birgt aber die Gefahr in sich, dass eine drehbar auf dem Düsenkörper angeordnete Klemmhülse sich verdreht, wodurch das Thermoelement aus der Ausnehmung gelangen kann.

Bei der letztgenannten Ausführungsform ist es vorteilhaft, wenn die Klemmhülse einen sich in axialer Richtung der Klemmhülse erstreckenden Schlitz aufweist, in den die Ausnehmung mündet. Hierdurch lässt sich ein Thermoelement auf einfache Weise in die Ausnehmung bringen. Es braucht lediglich an seinem Ende abgewinkelt sein, wodurch das abgewinkelte Ende des Thermoelements in den Schlitz und den Zugang gelegt werden kann, so dass der abgewinkelte Teil des Thermoelements durch axiale Verschiebung des sich im Schlitz befindlichen Teils des Thermoelements in die Ausnehmung gebracht werden kann.

Bei einer weiteren besonderen Ausführungsform der Erfindung ist vorgesehen, dass auf dem Düsenkörper eine Wärmeleithülse fest angeordnet ist. Durch die Wärmeleithülse wird in vorteilhafter Weise erreicht, dass der Düsenkörper nicht als Stufenzylinder ausgebildet werden muss. Weist die Wärmeleithülse denselben Innendurchmesser und Außendurchmesser wie die Klemmhülse auf, so kann der Düsenkörper zylinderförmig ausgebildet sein, ohne dass sich der Außendurchmesser des aus Düsenkörper und Hülsen bestehenden Elements am unteren Ende der Klemmhülse ändert.

In vorteilhafter Weise weist die Wärmeleithülse einen sich in axialer Richtung der Wärmeleithülse erstreckenden Schlitz auf. In den Schlitz kann die Zuleitung des Thermoelements beziehungsweise ein sich über die Länge der Klemmhülse hinaus erstreckender Teil des Röhrchens gelegt werden. Die Wärmeleithülse ist so ausgebildet, dass die Wärmeleithülse klemmend auf dem Düsenkörper angeordnet werden kann.

In vorteilhafter Weise besteht die Wärmeleithülse und/oder die Klemmhülse aus einem Material mit einem Wärmeleitwert von wenigstens 100 Watt pro Meter Kelvin. Als sehr gut hat sich hierfür eine Kupferlegierung herausgestellt.

Dadurch, dass die Hülsen einen geringen Wärmewiderstand aufweisen und der Düsenkörper einen um die Dicke der Hülsen verringerten Radius hat, ist in vorteilhafter Weise der Wärmewiderstand zwischen der Heizwicklung, die nun auf den Hülsen angeordnet ist, und dem Durchtrittskanal sehr gering. Des Weiteren wird durch die Hülsen erreicht, dass sich die von der Heizwicklung erzeugte Wärme sehr gut verteilt.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine erfindungsgemäß ausgebildete Heißkanaldüse in Explosionsdarstellung,
- Figur 2: die in Figur 1 dargestellte Heißkanaidüse im Zusammenbau mit einem Thermofühler in einer Stellung, in der der Zugang der Klemmhülse mit dem Schlitz der Wärmeleithülse fluchtet,
- Figur 3: einen Querschnitt entlang der Schnittlinie A-A der in Figur 2 dargestellten Heißkanaldüse,
- Figur 4: die in Figur 1 dargestellte Heißkanaldüse im Zusammenbau mit einem Thermofühler in einer Stellung, in der der Zugang der Klemmhülse mit dem Schlitz der Wärmeleithülse nicht fluchtet,
- Figur 5: einen Querschnitt entlang der Schnittlinie A-A der in Figur 4 dargestellten Heißkanaldüse,
- Figur 6: eine zweite Ausführungsform einer erfindungsgemäß ausgebildeten Heißkanaldüse in Explosionsdarstellung, und

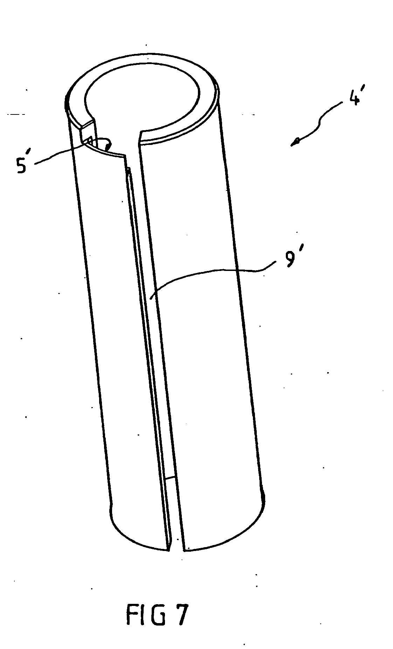

- Figur 7: die in Figur 6 enthaltene Klemmhülse in perspektivischer Darstellung.

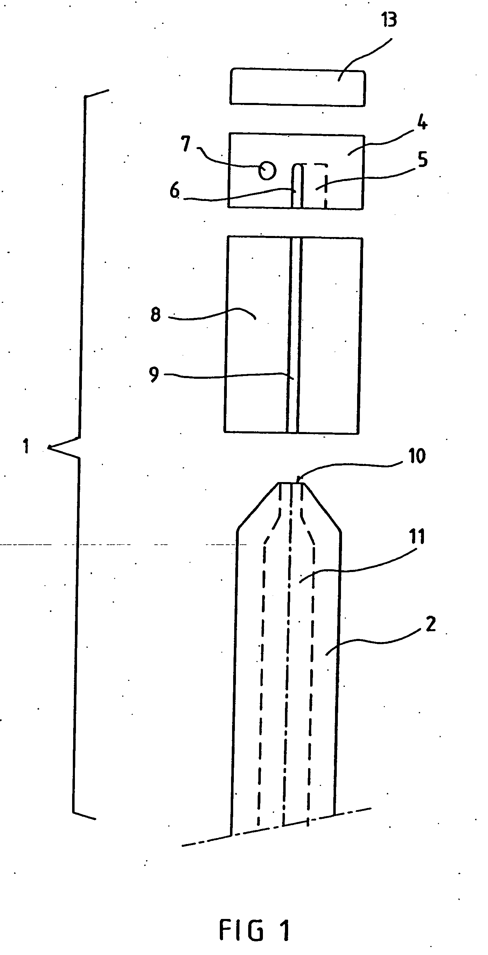

Wie Figur 1 entnommen werden kann, erstreckt sich durch einen Düsenkörper 2 einer Heißkanaidüse 1 ein Durchtrittskanal 11 für Schmelze, welcher in eine Düsenaustrittsöffnung 10 mündet. Der Düsenkörper 2 ist zylinderförmig ausgebildet. Der Einfachheit halber ist der der Düsenaustrittsöffnung 10 abgewandte Teil des Düsenkörpers 2 nicht vollständig dargestellt, da dieser Teil in herkömmlicher Weise ausgebildet ist.

Auf den Düsenkörper 2 wird eine Wärmeleithülse 8 aus einer Kupferlegierung aufgeschoben, welche einen sich in axialer Richtung erstreckenden Schlitz 9 aufweist. Die Wärmeleithülse 8 ist so ausgebildet, dass sie klemmend auf dem Düsenkörper 2 sitzt. Der Schlitz 9 der Wärmeleithülse 8 ist so breit, dass in ihn ein Röhrchen 3, in welchem am vorderen Ende ein Thermofühler angeordnet ist, vollständig eingebracht werden kann.

Oberhalb der Wärmeleithülse 8 ist eine Klemmhülse 4 angeordnet. Die Klemmhülse 4 besteht aus einer Kupferlegierung. Sie ist so ausgebildet, dass sie verdrehbar auf dem Hülsenkörper 2 angeordnet ist.

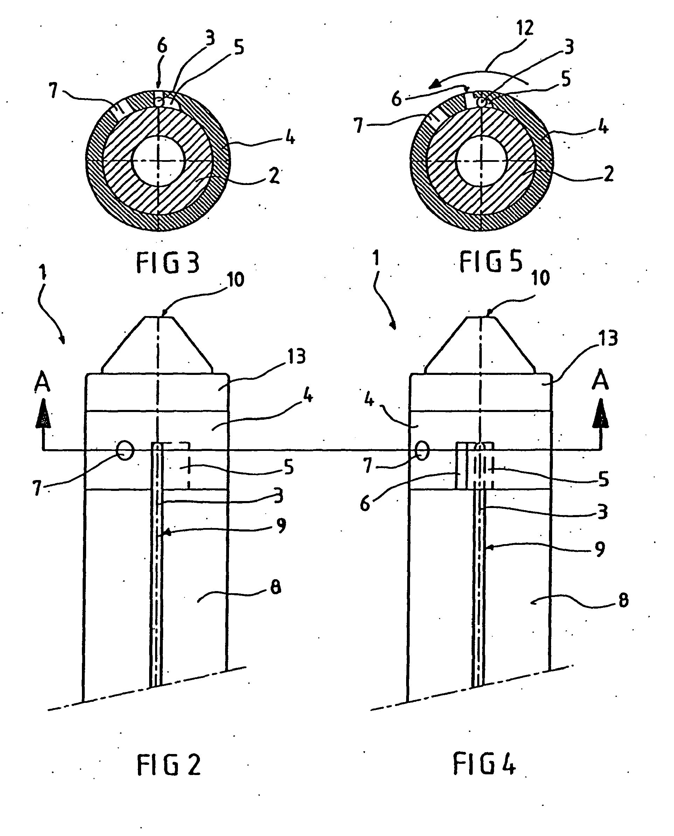

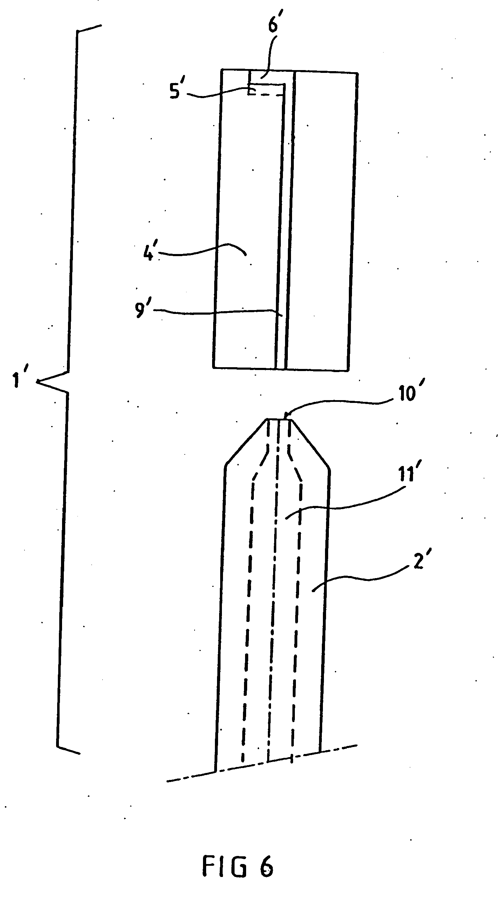

Wie insbesondere den Figuren 3 und 5 entnommen werden kann, weist die Klemmhülse 4 an ihrer Innenseite eine Ausnehmung 5 auf, welche durch einen Durchbruch 6 von außen zugänglich ist. Die Ausnehmung 5 sowie der Durchbruch 6 erstrecken sich bis an das untere Ende der Klemmhülse 4. Die Klemmhülse 4 weist eine Öffnung 7 auf, in welche eine Nase eines Werkzeugs zum Verdrehen der Klemmhülse 4 einsteckbar ist.

Oberhalb der Klemmhülse 4 wird ein Isolierring 13 angeordnet, mittels dem die Klemmhülse 4 auf dem Düsenkörper 2 gesichert wird.

Die Breite des Durchbruchs 6 ist so bemessen, dass das Röhrchen 3, in dem der Thermofühler angeordnet ist, durch den Durchbruch 6 hindurchtreten kann.

Wie insbesondere den Figuren 3 und 5 entnommen werden kann, verringert sich die Tiefe der Ausnehmung 5 in Richtung des Hülseriumfangs. An ihrer dem Durchbruch 6 abgewandten Seite verläuft die Tiefe der Ausnehmung 5 nach einem Radius, der in etwa dem Radius des Röhrchens 3 entspricht.

Bei den in den Figuren 2 und 3 gewählten Darstellungen ist die Klemmhülse 4 so auf dem Düsenkörper 2 angeordnet, dass der Durchbruch 6 mit dem Schlitz 9 der Wärmeleithülse 8 fluchtet. Hierdurch lässt sich das gerade verlaufende Röhrchen 3 in den Durchbruch 6 und in den Schlitz 9 einbringen. Hierbei kommt es mit dem Düsenkörper 2 in Kontakt.

Nachdem das Röhrchen 3 in den Durchbruch 6 und in den Schlitz 9 eingebracht wurde, wird die Klemmhülse 4 auf dem Düsenkörper 2 verdreht. Die in den Figuren 4 und 5 gewählte Darstellung zeigt die Klemmhülse 4 nach ihrer Verdrehung. Die Richtung der Verdrehung ist in Figur 5 durch einen Pfeil 12 dargestellt.

Wie insbesondere Figur 5 entnommen werden kann, befindet sich das Röhrchen 3 nach der Verdrehung der Klemmhülse in einem durch die Wandung der Ausnehmung 5 und den Düsenkörper 2 gebildeten Hohlraum. Dadurch, dass sich die Tiefe der Ausnehmung 5 in Richtung des Hülsenumfangs verringert, wird das Röhrchen 3 durch die Verdrehung der Klemmhülse 5 in Richtung des Pfeils 12 auf den Düsenkörper 2 aufgepresst. Hierdurch entsteht ein guter mechanischer Kontakt, wodurch der Wärmeübergangswiderstand zwischen dem Röhrchen 3 und dem Düsenkörper 2 sehr gering und im Wesentlichen bei allen Heißkanaldüsen gleich ist.

Die in Figur 6 dargestellte Heißkanaldüse entspricht in wesentlichen Teilen der in Figur 1 dargestellten Heißkanaldüse. Gleiche Elemente sind daher mit denselben Bezugszeichen versehen; zur Unterscheidung weisen sie jedoch einen Strich auf.

Bei der in Figur 6 dargestellten Heißkanaldüse ist auf dem Düsenkörper 2' eine Klemmhülse 4' angeordnet. Die Klemmhülse 4' besteht aus einer Kupferlegierung. Sie ist so ausgebildet, dass sie nicht verdrehbar auf dem Düsenkörper 2' angeordnet ist.

Die Klemmhülse 4' weist an ihrer Innenseite eine Ausnehmung 5' auf, welche sich in Richtung des Umfangs der Klemmhülse 4' erstreckt. Die Ausnehmung 5' ist durch einen einem Durchbruch ähnlichen Zugang 6', welcher parallel zur Ausnehmung 5' verläuft, und sich bis zur Stirnseite der Klemmhülse 4' erstreckt, zugänglich. Die Ausnehmung 5' und der Zugang 6' münden in einen sich in axialer Richtung der Klemmhülse 4' erstreckenden Schlitz 9'. Der Schlitz 9' ist so breit, dass in ihn ein Röhrchen, in welchem am vorderen Ende ein Thermofühler angeordnet ist, vollständig eingebracht werden kann. Ist das Ende des Röhrchens, an dem der Thermofühler angeordnet ist, abgewinkelt, lässt sich dieses Ende durch eine axiale Verschiebung des Röhrchens in dem Schlitz 9' in der Ausnehmung 5' anordnen.

## Patentansprüche

1. Heißkanaldüse (1) für Spritzgießformen, mit einem Düsenkörper (2), welcher einen mit einer Düsenaustrittsöffnung (10) verbundenen Durchtrittskanal (11) hat, und an welchem ein Thermoelement (3) befestigt ist, wobei
auf dem Düsenkörper (2) eine Klemmhülse (4) angeordnet ist, welche an ihrer Innenseite eine Ausnehmung (5) aufweist, die durch einen Zugang (6) von außen zugänglich ist,
**dadurch gekennzeichnet, dass** die Ausnehmung (5) mit dem Düsenkörper (2) einen Hohlraum bildet ; der sich in axialer Richtung der Klemmhülse (4) bis an das untere Ende der Klemmhülse (4) erstreckt.

2. Heißkanaldüse nach Anspruch 1,
**dadurch gekennzeichnet,**
**dass** die Klemmhülse (4) verdrehbar auf dem Düsenkörper angeordnet ist.

3. Heißkanaldüse nach einem der Ansprüche 1 bis 2,
**dadurch gekennzeichnet,**
**dass** sich die Tiefe der Ausnehmung (5) in Richtung des Hülsenumfangs verringert.

4. Heißkanaldüse nach Anspruch 4,
**dadurch gekennzeichnet,**
**dass** die Verringerung der Tiefe nach einer Kurve erfolgt

5. Heißkanaldüse (1') für Spritzgießformen, mit einem Düsenkörper (2'), welcher einen mit einer Düsenaustrittsöffnung (10') verbundenen Durchtrittskanal (11') hat, und an welchem ein Thermoelement (3') befestigt ist, wobei
auf dem Düsenkörper (2') eine Klemmhülse (4') angeordnet ist, welche an ihrer Innenseite eine Ausnehmung (5')aufweist, die durch einen Zugang 6') von außen zugänglich ist,
**dadurch gekennzeichnet,**
**dass** die Ausnehmung (5') mit dem Düsenkörper (2') einen Hohlraum bildet, der sich in Richtung des Umfangs der Klemmhülse (4') erstreckt, wobei der Zugang (6') parallel zur Ausnehmung (5')

6. Heißkanaldüse nach Anspruch 5,
**dadurch gekennzeichnet,**
**dass** die Klemmhülse (4') einen sich in axialer Richtung der Klemmhülse (4') erstreckenden Schlitz (6') aufweist.

7. Heißkanaldüse nach einem der Ansprüche 1 bis 6,
**dadurch gekennzeichnet,**
**dass** auf dem Düsenkörper (2) eine Wärmeleithülse (8) fest angeordnet ist.

8. Heißkanaldüse nach Anspruch 7,
**dadurch gekennzeichnet,**
**dass** die Wärmeleithülse (8) einen sich in axialer Richtung der Wärmeleithülse (8) erstreckenden Schlitz (9) aufweist.

9. Heißkanaldüse nach Anspruch 7 oder 8,
**dadurch gekennzeichnet,**
**dass** die Wärmeleithülse (8) und/oder die Klemmhülse (4) aus einem Material mit einem Wärmeleitwert von wenigstens 100 Watt pro Meter Kelvin bestehen beziehungsweise besteht

## Claims

1. Hot nozzle (1) for injection moulding, comprising a nozzle body (2) which has a through channel (11) adjoining a nozzle exit opening (10) and to which a thermocouple (3) is attached, wherein a clamping sleeve (4) is arranged on the nozzle body (2), said clamping sleeve having a recess (5) at its inner side, said recess being accessible from outside through an access opening (6), **characterised in that**, together with the nozzle body (2), the recess (5) forms a hollow chamber which extends in the axial direction of the clamping sleeve (4) as far as the lower end of the clamping sleeve (4).

2. Hot nozzle according to claim 1, **characterised in that** the clamping sleeve (4) is rotatably arranged on the nozzle body.

3. Hot nozzle according to one of the claims 1 to 2, **characterised in that** the depth of the recess (5) lessens in the direction of the sleeve periphery.

4. Hot nozzle according to claim 3, **characterised in that** the lessening of the depth takes place according to a curve.

5. Hot nozzle (1') for injection moulding, comprising a nozzle body (2') which has a through channel (11') adjoining a nozzle exit opening (10') and to which a thermocouple (3') is attached, wherein a clamping sleeve (4') is arranged on the nozzle body (2'), said clamping sleeve having a recess (5') at its inner side, said recess being accessible from outside through an access opening (6'), **characterised in that**, together with the nozzle body (2'), the recess (5') forms a hollow chamber which extends in the direction of the periphery of the clamping sleeve (4'), wherein the access opening (6') extends parallel to the recess (5').

6. Hot nozzle according to claim 5, **characterised in that** the clamping sleeve (4') is provided with a slit (6') which extends in the axial direction of the clamping sleeve (4') .

7. Hot nozzle according to one of the claims 1 to 6, **characterised in that** a heat conducting sleeve (8) is firmly arranged on the nozzle body (2).

8. Hot nozzle according to claim 7, **characterised in that** the heat conducting sleeve (8) has a slit (9) which extends in the axial direction of the heat conducting sleeve (8).

9. Hot nozzle according to claim 7 or 8, **characterised in that** the heat conducting sleeve (8) and/or the clamping sleeve (4) is/are made of a material which has a thermal conductivity of at least 100 Watts per meter Kelvin.

## Revendications

1. Buse (1) à canal chaud pour moules de coulée par injection, munie d'un corps (2) comportant un canal de passage (11) relié à un orifice (10) de sortie de la buse, et auquel un thermocouple (3) est fixé, sachant qu'une douille de coincement (4) disposée sur le corps (2) de la buse présente, sur sa face intérieure, un évidement (5) accessible de l'extérieur par l'intermédiaire d'une arrivée (6), **caractérisée par le fait que** l'évidement (5) forme, avec le corps (2) de la buse, une cavité s'étendant dans la direction axiale de la douille de coincement (4), jusqu'à l'extrémité inférieure de ladite douille de coincement (4).

2. Buse à canal chaud selon la revendication 1, **caractérisée par le fait que** la douille de coincement (4) est montée à rotation sur le corps de ladite buse.

3. Buse à canal chaud selon l'une des revendications 1 à 2, **caractérisée par le fait que** la profondeur de l'évidement (5) se réduit en direction du pourtour de la douille.

4. Buse à canal chaud selon la revendication 3, **caractérisée par le fait que** la diminution de la profondeur a lieu suivant une courbe.

5. Buse (1') à canal chaud pour moules de coulée par injection, munie d'un corps (2') comportant un canal de passage (11') relié à un orifice (10') de sortie de la buse, et auquel un thermocouple (3') est fixé, sachant qu'une douille de coincement (4') disposée sur le corps (2') de la buse présente, sur sa face intérieure, un évidement (5') accessible de l'extérieur par l'intermédiaire d'une arrivée (6'), **caractérisée par le fait que** l'évidement (5') forme, avec le corps (2') de la buse, une cavité s'étendant dans la direction du pourtour de la douille de coincement (4'), l'arrivée (6') s'étendant parallèlement audit évidement (5').

6. Buse à canal chaud selon la revendication 5, **caractérisée par le fait que** la douille de coincement (4') comporte une fente (6') s'étendant dans la direction axiale de ladite douille de coincement (4').

7. Buse à canal chaud selon l'une des revendications 1 à 6, **caractérisée par le fait qu'**une douille thermoconductrice (8) est disposée rigidement sur le corps (2) de ladite buse.

8. Buse à canal chaud selon la revendication 7, **caractérisée par le fait que** la douille thermoconductrice (8) comporte une fente (9) s'étendant dans la direction axiale de ladite douille thermoconductrice (8).

9. Buse à canal chaud selon la revendication 7 ou 8, **caractérisée par le fait que** la douille thermoconductrice (8) et/ou la douille de coincement (4) consiste(nt) en un matériau présentant une conductivité thermique d'au moins 100 watts par mètre Kelvin.
